# EUROPÄISCHE PATENTSCHRIFT

(11) **EP 0 523 481 B1**
(45) Veröffentlichungstag und Bekanntmachung des Hinweises auf die Patenterteilung: **31.01.1996**
(21) Anmeldenummer: 92111351.0
(22) Anmeldetag: 03.07.1992
(51) Int. Cl.: B28B 13/06, B65G 47/90

(54) **Vorrichtung zum Entladen von Steinformlingen aus einer Formpresse**
Device for unloading blocks from a moulding press
Dispositif pour le déchargement de blocs d'une presse de moulage

(30) Priorität: 19.07.1991 DE 4123953
(43) Veröffentlichungstag der Anmeldung: 20.01.1993
(73) Patentinhaber: LANGENSTEIN & SCHEMANN GMBH, D-96450 Coburg (DE)
(72) Erfinder: Rüger, Herbert. Dipl.-Ing., W-8621 Schneckenlohe-Beickheim (DE)
(74) Vertreter: Böhme, Volker, Dipl.-Ing.

(56) Entgegenhaltungen:
- DE-C- 874 267
- GB-A- 1 150 287
- US-A- 2 685 117
- US-A- 2 899 043
- US-A- 3 974 919
- US-A- 4 453 882
- PATENT ABSTRACTS OF JAPAN vol. 13, no. 392 (M-865)(3740) 30. August 1989 & JP-A-1 139 225 (SEIKO EPSON CORP.) 31. Mai 1989

## Beschreibung

Die Erfindung betrifft eine Vorrichtung zum Entladen von Steinformlingen aus einer Preßform einer Formpresse auf eine Ablage, bei der Auswerfer der Formpresse zum Ausheben der Steinformlinge aus der Preßform nach oben fahrbar sind und bei der ein Greiferkopf an einem Schlitten angebracht und zwischen der Preßform und der Ablage hin- und herfahrbar ist, wobei der Schlitten an einem neben der Formpresse angeordneten Gestell vorgesehen ist, gemäß Oberbegriff des Patentanspruchs 1.

Bei einer bekannten (DE-A-35 02 586) Vorrichtung gemäß dem Oberbegriff des Patentanspruchs 1 ist der Ausleger eine Fortsetzung des Schlittens und mit diesem einstückig. Der Stellantrieb ist zwischen dem Ausleger und dem Greiferkopf wirkend vorgesehen, wobei der Greiferkopf mit dem Ausleger über den Stellantrieb verbunden ist. Es ist weiterhin eine Vorrichtung bekannt (US-A-3 974 919), die dem Entladen von Briketts dient, die beachtlich kleiner als Steinformlinge sind und die nach oben aus der Preßform herausragen. Zum Entladen ist ein Saugerkopf vorgesehen und der Stellantrieb ist stets außerhalb der Formpresse im Bereich des Gestelles angeordnet. Der Ausleger ist mit dem Schlitten ein starres Gebilde.

Bei der bekannten (DE-A- 35 08 235) Vorrichtung sitzt der Greiferkopf unmittelbar am Schlitten, der, wenn sich der Greiferkopf über der Preßform befindet, von dem Gestell auslegerartig wegragt. Es binden sich die Oberkante der Preßform und die Oberseite der Auflage auf demselben Niveau und die Steinformlinge werden mit der Unterseite über diese Niveau angehoben. Der Greiferkopf bewegt die Steinformlinge bei zurückgezogenen Auswerfern mit der Unterseite über dieses Niveau angehoben waagrecht zur Auflage und läßt sie auf diese fallen. Dieses frei Fallenlassen führt zu Beschädigungen der noch feuchten bzw. grünen Steinformlinge, z. B. am Kantenbereich der Unterseite. Die Steine aus diesen beschädigten Steinformlingen lassen sich nur noch als zweite Wahl und nicht mehr als erste Wahl für Sichtmauerwerk verkaufen.

Eine Aufgabe der Erfindung ist es daher, eine Vorrichtung der eingangs genannten Art zu schaffen, bei der die Gefahr von durch Fallenlassen bedingten Beschädigungen der Steinformlinge in einer vorrichtungsmäßig einfachen und auf die Steinformlinge abgestellten Weise vermindert ist. Die erfindungsgemäße Vorrichtung weist, diese Aufgabe lösend, die kennzeichnenden Merkmale des Patentanspruchs 1 auf.

Es lassen sich die Steinformlinge nach dem Ergreifen etwas anheben, bevor sie waagrecht weggefahren werden, und die Steinformlinge werden dann auf die Ablage geführt abgesetzt, so daß durch Fallenlassen bedingte Beschädigungen vermieden sind. Durch die Auslegereinrichtung läßt es sich vermeiden, die der Auf- und Abbewegung dienenden Einrichtungen über dem Greiferkopf vorzusehen und mit diesem in die Formpresse zu fahren; vielmehr sind diese der Auf- und Abbewegung dienenden Einrichtungen auch bei über der Preßform befindlichem Greiferkopf außerhalb der Formpresse im Bereich des Gestelles angeordnet. Die Auf- und Abbewegung läßt sich z. B. mittels Elektromotor und Spindel verwirklichen und genügt der bei Steinformlingen erforderlichen Genauigkeit. Die Auf- und Abbewegung erfolgt, vornehmlich bei kleinen Hüben, mit einem sehr weichen bzw. sanften Absetzen und auch Abheben der Steinformlinge, was sehr einfach mittels Exzenter zu bauen ist. Die Erfindung wird primär in Verbindung mit der Kalksandsteinherstellung verwendet, bei der eine Mischung von Sand, Kalk und Wasser zum Steinformling gepreßt wird.

Da die Lagerung der Auslegereinrichtung um eine waagerechte Achse drehbar ist und der Stellantrieb mit Abstand von der Lagerung an einem von der Auslegereinrichtung gebildeten Hebelarm angreift, ist die Bauweise vereinfacht. Eine durch das Schwenken bedingte Schrägstellung der am Greiferkopf gehaltenen Steinformlinge können diese aushalten.

Besonders zweckmäßig und vorteilhaft ist es auch, wenn ein Angeben des die Steinformlinge erfaßt haltenden Greiferkopfes mittels des Stellantriebs vorgesehen ist. Mittels des Stellantriebs, insbesondere des Exzenterantriebs, lassen sich die noch weichen Steinformlinge sehr sanft anheben, wobei berücksichtigt ist, daß die Steinformlinge vom Greiferkopf nicht sehr fest gehalten werden und nicht stark beschleunigt werden dürfen.

Besonders zweckmäßig und vorteilhaft ist es weiterhin, wenn der Schlitten bei über der Preßform befindlichem Greiferkopf vollständig in dem Gestell angeordnet ist. Dies läßt sich aufgrund der Auslegereinrichtung verwirklichen und ergibt eine größere Kompaktheit der Vorrichtung.

Die Auflage ist in der Regel ein Förderband bzw. deren oberes Trumm; gerade bei Ausbildung der Auflage als Förderband ist es angebracht, eine Auf- und Abbewegbarkeit der Auflage zu vermeiden. Der Greiferkopf weist an einem Kopfgestell Greifer auf, die nicht pendelnd oder drehbar am Kopfgestell sind, sondern im Hinblick auf die Schwenkbarkeit der Auslegereinrichtung starr am Kopfgestell sind. Die Steinformlinge machen in der Regel nur einen Hub von ca. 10 mm, wobei der Schwenkwinkel der Auslegereinrichtung entsprechend klein ist.

Besonders zweckmäßig und vorteilhaft ist es sodann, wenn der Greiferkopf aufgrund seines Gewichts die Auslegereinrichtung in Anlage am Exzenterantrieb hält. Dies vereinfacht die Bauweise der Vorrichtung, insbesondere des Exzenters, da dieser kraftmäßig nur den Hub und nicht das Absenken des Greiferkopfes zu bewirken hat.

Besonders zweckmäßig und vorteilhaft ist es ebenso, wenn ein Greiferantrieb an der Auslegereinrichtung angebracht ist und über ein an dieser vorgesehenes Gestänge auf die Greifer des Greiferkopfes wirkt. Dies ist eine an die Auslegerbauweise angepaßte Betätigungseinrichtung der Greifer.

Besonders zweckmäßig und vorteilhaft ist es noch, wenn eine waagerechte Position des Greiferkopfes durch Anschlag der Auslegereinrichtung am Schlitten gesichert ist. Somit läßt sich der Greiferkopf aus dieser waagerechten Position nur anheben und nur in diese waagerechte Position absenken. Es muß wegen der am Kopfgestell starr angebrachten Greifer bei der Vorrichtung ganz allgemein darauf geachtet werden, daß der Greiferkopf die Steinformlinge bei genau waagerechter Position erfaßt und freigibt.

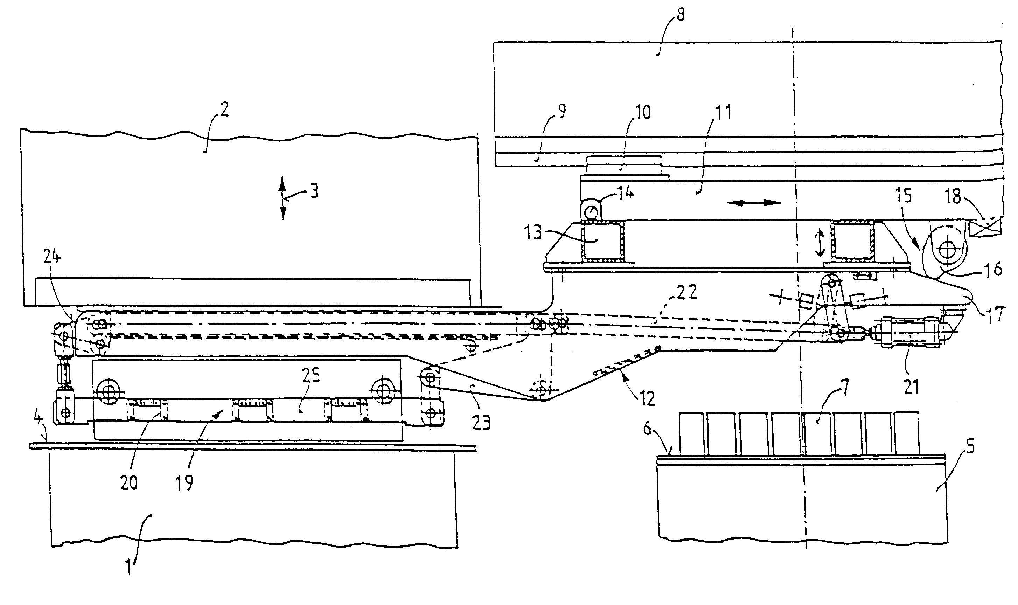

In der Zeichnung ist eine bevorzugte Ausführung der Erfindung dargestellt und zwar in einer Seitenansicht eine Vorrichtung zum Entladen von Steinformlingen aus einer Formpresse.

Die Vorrichtung gemäß Zeichnung umfaßt eine Formpresse, zu der eine untere ortsfest angeordnete Preßform 1 gehört. Mit Abstand über der Preßform 1 befindet sich ein Oberwerkzeug 2, das gemäß einem Doppelpfeil 3 auf- und abbewegbar ist, um Steinformlinge in der Preßform aus eingefülltem Schüttgut durch Pressen zu bilden und um Platz für ein Ausstoßen der Steinformlinge aus der Preßform zu schaffen. Es sind nichtgezeigte stempelartige Auswerfer unter der Preßform 1 vorgesehen, die zum Auswerfen bzw. Ausschieben der Steinformlinge nach oben gefahren werden, bis sich ihre oberen Enden geringfügig, z. B. ca. 10 mm, über der Oberkante 4 der Preßform 1 befinden. Neben der Formpresse bzw. neben der Preßform 1 befindet sich mit etwas Abstand von dieser eine als Förderband ausgebildete Auflage 5, deren Oberseite 6 sich auf dem Niveau der oberen Enden der hochgefahrenen Auswerfer befindet. Auf der Auflage 5 sind abgelegte rechteckige Steinformlinge 7 gezeigt und das Förderband transportiert die Steinformlinge rechtwinkelig zur Zeichenebene ab.

Mit Abstand oberhalb der Auflage 5 und ebenfalls neben der Formpresse befindet sich ein ortsfestes Gestell 8, das nach unten hin zwei Gleitschienen 9 bildet, von denen nur eine gezeigt ist. Auf jeder Gleitschiene 9 sitzen zwei Gleitböcke 10, von denen nur einer gezeigt ist und die Bestandteil eines rahmenartigen Schlittens 11 sind, der waagerecht gemäß einem Doppelpfeil hin-und herverfahrbar ist. Es ist eine Auslegereinrichtung 12 vorgesehen, die an einem Schlittenteil an der Oberseite vierkantige Rohre 13 aufweist. Auf der der Formpresse zugewendeten Seite ist das Schlittenteil der Auslegereinrichtung 12 an dem dort befindlichen Rohr 13 über ein Drehlager 14 an den Schlitten 11 angelenkt. Auf der der Formpresse abgewendeten Seite des Schlittenteiles der Auslegereinrichtung 12 ist ein als Exzenterantrieb ausgebildeter Stellantrieb 15 vorgesehen, der an dem Schlitten 11 gelagerte Exzenterscheiben 16 aufweist, die gegen Nasen 17 der Auslegereinrichtung 12 drücken und mittels eines Motors 18 gedreht werden. Ein Greiferteil der länglichen Auslegereinrichtung 12 trägt einen Greiferkopf 19, der nach unten hin Greifer 20 aufweist. Der Greiferkopf 19 ist in der waagerechten Position gezeigt, in der er Steinformlinge ergreift und abgibt.

Am Schlittenteil der Auslegereinrichtung 12 ist ein Greiferantrieb 21 vorgesehen, der über ein Gestänge 22 zwei Winkelstücke 23, 24 betätigt, die am Greiferteil der Auslegereinrichtung 12 gelagert sind. Die Winkelstücke 23, 24 heben und senken Balken 25, welche das Ergreifen und Freigeben der Steinformlinge bewirken. Der Greiferkopf 19 wird nach dem Erfassen aus der waagerechten Position etwas, z. B. 10 mm, angehoben, damit er durch das Absetzen auf der Auflage 5 wieder in die waagerechte Position kommt.

## Patentansprüche

1. Vorrichtung zum Entladen von Steinformlingen (7) aus einer Preßform (1) einer Formpresse auf eine Ablage (5),
bei der Auswerfer der Formpresse zum Ausheben der Steinformlinge aus der Preßform nach oben fahrbar sind,
bei der ein Greiferkopf (19) über einen Ausleger an einem Schlitten (11) angebracht und zwischen der Preßform (1) und der Ablage (5) hin- und herfahrbar ist,
bei der der Schlitten (11) an einem neben der Formpresse angeordneten Gestell (8) vorgesehen ist und
bei der für eine Auf- und Abbewegung des Greiferkopfes (19) ein Stellantrieb (15) vorgesehen ist,
**dadurch gekennzeichnet**,
daß eine gesonderte Auslegereinrichtung (12) vorgesehen und am Schlitten (11) beweglich gelagert ist und den Greiferkopf (19) unmittelbar trägt und daß der Stellantrieb (15) zwischen dem Schlitten (11) und der Auslegereinrichtung (12) wirkend vorgesehen ist, und
daß die Lagerung (14) der Auslegereinrichtung (12) um eine waagerechte Achse drehbar ist und der Stellantrieb (15) mit Abstand von der Lagerung (14) an einem von der Auslegereinrichtung (12) gebildeten Hebelarm angreift.

2. Vorrichtung nach Anspruch 1, **dadurch gekennzeichnet**, daß der Stellantrieb (15) als Exzenterantrieb ausgebildet ist.

3. Vorrichtung nach Anspruch 1 oder 2, **dadurch gekennzeichnet**, daß der Schlitten (11) bei über der Preßform (1) befindlichem Greiferkopf (19) vollständig in dem Gestell (8) angeordnet ist.

4. Vorrichtung nach Anspruch 2 oder 3, **dadurch gekennzeichnet**, daß der Greiferkopf (19) aufgrund seines Gewichtes die Auslegereinrichtung (12) in Anlage am Exzenterantrieb (15) hält.

5. Vorrichtung nach einem der vorhergehenden Ansprüche, **dadurch gekennzeichnet**, daß ein Greiferantrieb (21) an der Auslegereinrichtung (12) angebracht ist und über ein an diesem vorgesehenes Gestänge (22) auf die Greifer (20) des Greiferkopfes (19) wirkt.

6. Vorrichtung nach einem der vorhergehenden Ansprüche, **dadurch gekennzeichnet**, daß eine waagerechte Position des Greiferkopfes (19) durch Anschlag der Auslegereinrichtung (12) am Schlitten (11) gesichert ist.

## Claims

1. A device for unloading stone blocks (7) from a matrix (1) of a moulding press to an area of deposit (5),
in which device ejectors of the moulding press for lifting the stone blocks out of the matrix are upwardly displaceable,
in which device a grab head (19) is attached via an arm to a slide (11) and is displaceable backwards and forwards between the matrix (1) and the area of deposit (5),
in which device the slide (11) is provided on a frame (8) arranged adjacent the moulding press, and
in which device an adjusting drive system (15) is provided for an upward and downward movement of the grab head (19),
**characterised in that**
separate arm means (12) are provided and are displaceably mounted on the slide (11), and directly support the grab head (19), and the adjusting drive system (15) is provided so as to operate between the slide (11) and the arm means (12), and the bearing (14) of the arm means (12) is rotatable about a horizontal axis, and the adjusting drive system (15) spaced at a distance from the bearing (14) acts upon a lever arm formed from the arm means (12).

2. A device according to Claim 1, **characterised in that** the adjusting drive system (15) is formed as an eccentric drive system.

3. A device according to Claim 1 or 2, **characterized in that** the slide (11) for the grab head (19) situated above the matrix (1) is arranged completely in the frame (8).

4. A device according to Claim 2 or 3, **characterized in that** due to its weight the grab head (19) supports the arm means (12) resting on the eccentric drive system (15).

5. A device according to any one of the preceding claims, **characterized in that** a grab drive system (21) is attached to the arm means (12) and acts, via rods (22) provided at the said drive system, on the grab (20) of the grab head (19).

6. A device according to any one of the preceding claims, **characterized in that** a horizontal position of the grab head (19) is ensured by stopping the arm means (12) at the slide (11).

## Revendications

1. Dispositif de déchargement de blocs (7) hors d'un moule (1) d'une presse de moulage sur une table de réception (5), dans lequel :
pour soulever les blocs du moule, l'éjecteur de la presse de moulage est déplaçable vers le haut,
une tête de saisie (19) est montée sur un chariot (11) par l'intermédiaire d'un bras et peut être déplacée en va-et-vient entre le moule (1) et la table de réception (5),
le chariot (11) est prévu sur un châssis (8) agencé à côté de la presse de moulage, et
un organe moteur (15) est prévu pour les mouvements de montée et de descente de la tête de saisie (19),
caractérisé en ce qu'il est prévu un dispositif en porte-à-faux (12) séparé qui est monté mobile sur le chariot (11) et qui porte directement la tête de saisie (19),
en ce que l'organe moteur (15) est prévu opérationnel entre le chariot (11) et le dispositif en porte-à-faux (12), et
en ce que le palier (14) du dispositif en porte-à-faux (12) pivote autour d'un axe horizontal, et l'organe moteur (15) attaque à distance du palier (14) sur un bras de levier formé depuis le dispositif en porte-à-faux (12).

2. Dispositif selon la revendication 1, caractérisé en ce que l'organe moteur (15) est réalisé sous la forme d'un entraînement à excentrique.

3. Dispositif selon l'une ou l'autre des revendications 1 et 2, caractérisé en ce que lorsque la tête de saisie (19) se trouve au-dessus du moule (1), le chariot (11) est entièrement agencé dans le châssis (8).

4. Dispositif selon l'une ou l'autre des revendications 2 et 3, caractérisé en ce que la tête de saisie (19), en raison de son poids, maintient le dispositif en porte-à-faux (12) en appui sur l'entraînement à excentrique.

5. Dispositif selon l'une quelconque des revendications précédentes, caractérisé en ce qu'un entraînement de saisie (21) est monté sur le dispositif en porte-à-faux (12) et agit sur les éléments de saisie (20) de la tête de saisie (19) par l'intermédiaire d'une tringlerie (22) prévue sur celui-ci.

6. Dispositif selon l'une quelconque des revendications précédentes, caractérisé en ce qu'une position horizontale de la tête de saisie (19) est assurée par butée du dispositif en porte-à-faux (12) sur le chariot (11).
